# EUROPEAN PATENT SPECIFICATION

(11) **EP 3 945 260 B1**
(45) Date of publication and mention of the grant of the patent: **23.08.2023**
(21) Application number: 20188414.5
(22) Date of filing: 29.07.2020
(51) Int. Cl.: F24F 13/02, F16L 21/035, F16L 21/08

(54) **CONNECTION ELEMENT FOR CONNECTING WITH RECTANGULAR DUCTING COMPONENTS**
VERBINDUNGSELEMENT ZUM VERBINDEN MIT RECHTECKIGEN KANALBAUTEILEN
ÉLÉMENT DE RACCORDEMENT POUR RACCORD AVEC DES COMPOSANTS DE CONDUITES RECTANGULAIRES

(43) Date of publication of application: 02.02.2022
(73) Proprietor: DEC Technologies B.V., 7547 RD Enschede (NL)
(72) Inventor: GÜL, Siraç, 7547 RD Enschede (NL); DE GOEIJ, Theodorus Anthonius, 7547 RD Enschede (NL)
(74) Representative: van Dam, Vincent

(56) References cited:
- WO-A1-89/10512
- GB-A- 2 011 000
- US-A- 5 653 482
- US-A1- 2019 203 972

## Description

The present invention relates to a connection element for connecting with rectangular ducting components, a rectangular ducting system comprising said connection element and a heating, ventilating or air conditioning (HVAC) system comprising said rectangular ducting system.

Rectangular ducting components are widely used in heating, ventilating and air conditioning systems. The use of such ducting components is advantageous in locations such as floors and ceilings, because ducting of other shapes such as circular ducting components occupy to much space.

Ducting components with a rectangular cross section typically have a relatively short length and it is necessary to connect ducting components to realize a desired overall length.

When exposed to pressure load or vacuum, rectangular ducting components are more vulnerable deflecting than circular ducting components because in rectangular ducting components forces are not distributed equally, especially in case of ducting components with an oblong cross section. This can lead to deflecting of the ducting component panels, which on its turn may cause fatigue, leakage or even collapse of the ducting. In particular the connections between ducting components cause a challenge in this respect.

GB 2 011 000 A1 discloses a flanged coupling for joining two ducts in two halves each half comprising four hollow frame members into each of which may be inserted a free edge of one of a duct's side walls. The two halves of the coupling may be joined by a sliding strip and/or screws.

US 2019/203972 A1 discloses a connector assembly comprises a plurality of flange elements, and a plurality of corner elements. Each flange element includes attachment means for attachment of an end face of the duct section thereto, and each corner element engages with two flange elements.A first duct section can be attached to a second duct section using a two-sided adhesive tape applied around the perimeter of the connector assembly of the first duct section. The two-sided tape both adheres the first section to the second duct suction and provides a seal between the two duct sections.

US 5 653 482 A discloses a seal system for joining the ends of two generally rectangular duct sections, including two frames secured to each other with a seal and attached to their respective duct end sections. The frame members each include four flange portions and four corner pieces. A corner piece connects adjacent flange portions to form the generally rectangular frame. The end portions of the ducts are inserted into longitudinal openings of the duct receiving leg portions. A seal, having four angular corner pieces and four linear pieces, is positioned between the frames to connect the duct sections.

WO 89/10512 A1 discloses a joint flange for connecting air duct sections by means of a "snapp in" type operated connection.

Connecting ducting components with a rectangular cross section is often time consuming and expensive and it is difficult to avoid leakage. A number of ways of connecting ducting components with a rectangular cross section is disclosed in US 2008/0134745 A1. The connections described therein require multiple hardware components such as flanges, separate corner pieces, which cause installation and maintenance difficulties and which imposes vulnerability to leakage.

The present invention aims to overcome these problems.

### Summary of the invention

Therefore the invention relates in a first aspect to a connection element in accordance with claim 1.

In a second aspect the invention relates to a rectangular ducting system, comprising at least a ducting component with a rectangular inner circumference and connected with a connection element of the first aspect, wherein at least one end section of the main body of the connection element is inserted into an end section of said ducting component; and wherein the lip elements of the connection element clamp said end section of said ducting component between the lip elements and the rectangular outer circumference of the main body of the connection element.

In a third aspect the invention relates to a HVAC system, comprising a rectangular ducting system according to the second aspect.

The connection element according to the invention provides a one piece connector for connecting rectangular ducting components, which only requires sliding the connection element into a female ducting component to obtain a sealing connection between rectangular ducting components, without further equipment or hardware. The connection element according to the invention allows easy installation and de-installation at all times. The inventors have found that the connection obtained this way is able to withstand high pressures from inside or outside without leaking. Furthermore, the connection provides a reinforcement of the ducting system in which it is installed. This allows to use ducting components with relatively thin walls while still meeting requirements with respect to strength, pressure load, and air leakage. For instance the inventors have found that by using the connection elements according to the invention in a HVAC system a leakage class norm D according to EN-12237 can be achieved.

### Short description of the drawings

Fig. 1 shows an perspective view of a preferred embodiment of the connection element according to the invention
Fig. 2 shows a front view of the embodiment of Fig.1
Fig. 3 shows a top view of the embodiment of Fig.1
Fig. 4 shows a side view of the embodiment of Fig.1
Fig. 5 shows a connection element with an end section inserted into an end section of a rectangular duct.
Fig.6. shows a top view of an exemplary connection element according to the invention wherein its main body contains a turn that forces a change in direction of air flow.
Fig.7 shows a perspective view of another exemplary connection element according to the invention which contains an end section being insertable into an end section of a ducting component with a rectangular inner circumference, while the end section is designed to be connected with circular ducting components.

### Detailed description of the invention

The present invention is based on the advantageous design of a connection element for connecting rectangular ducting components which has at least one male end section for insertion into a female end section of a ducting component and which comprises at each panel of the connection element at least one separate lip element fixed on the outer face of the panel. The lip elements are each configured to extend at least partially over the outer face of said end section of said ducting component when the male part of the connection element is inserted therein and to clamp the female end section of the ducting component between the lip elements and the male end section of the connection element. This way the male end section of the connection element can be inserted into the female end section of a ducting component simply by sliding, to obtain a sealing connection between rectangular ducting components, without the need for further equipment or hardware.

The main body of the connection element has an end section having a rectangular outer circumference, said end section being insertable into an end section of a ducting component with a rectangular inner circumference. In one preferred embodiment the full main body has a rectangular outer circumference and the full ducting component in which it is inserted has a rectangular inner circumference. This allow to connect multiple rectangular ducting components by means of a connection element.

In a practical design the inner circumference of the main body has the same shape as the outer circumference, i.e. if the end section has a rectangular outer circumference, it suitably also has a rectangular inner circumference.

The main body may form a straight channel on its inside, or it may contain a contains a turn that forces a change in direction of air flow.

The connection element may be symmetrical or not. In this respect it may contains a single end section being insertable into an end section of a ducting component with a rectangular inner circumference or multiple, such as two opposite end sections. The latter embodiment is best suitable to connect two rectangular ducts to each other.

In this respect, in an asymmetric embodiment the connection element contains an end section being insertable into an end section of a ducting component with a rectangular inner circumference, while another end section is designed to be connected with ducting components having a different cross-section, such as a circular or elliptic cross section. This allows to connect a rectangular ducting system with a ducting system of a different shape. This is in particular practical if a new ducting system has to be connected to an already existing ducting system.

In order to achieve a sealing connection it is preferred that the inner circumference of the end section of the ducting component and the outer circumference of the end section of the connection element are designed such that the end section of the connection element can be inserted fittingly or substantially fittingly into the end section of the ducting component.

The connection element may be in the shape of any ducting component, for instance in the shape of a rectangular duct, which in this case also functions as a connection element.

In a preferred embodiment, however the connection element is designed as a male-male connector of which panels at each end section can be inserted in respective ducting components. In this case the main body comprises opposite end sections having a rectangular outer circumference, said opposite end sections being insertable into end sections of respective ducting components with a rectangular inner circumference; and wherein said connection element comprises separate lip elements fixed on each panel of the rectangular outer circumference of the main body, which are configured to extend at least partially over the outer face of end sections of said respective ducting components when the main body is inserted therein so as to clamp said respective ducting components between the lip elements and the rectangular outer circumference of the main body.

The end sections may be positioned opposite with respect to each other in a straight line in case of a straight connection element or opposite with respect to each other under an angle in case the connection element contains a bend or turn. In this respect the term "opposite" in the context of this application is to be understood as "on the other side", regardless whether the other side is in a straight line or not. In this respect opposite end sections can also be referred to as entry end section and exit end section, wherein in a ducting system a medium flowing through the connection element enters on the side of the entry end section and exits on the side of the exit end section.

In this respect it is preferred that the main body of the connection element comprises end sections having a rectangular outer circumference, said end sections being insertable into end sections of respective ducting components with a rectangular inner circumference; and wherein said connection element comprises separate lip elements fixed on each panel of the rectangular outer circumference of the main body, which are configured to extend at least partially over the outer face of end sections of said respective ducting components when the main body is inserted therein so as to clamp said respective ducting components between the lip elements and the rectangular outer circumference of the main body. This embodiment is preferred because this way basic rectangular ducts without further features or additional components, i.e. a hollow profile consisting of four panels interlinked via corner sections, can be connected. Such basic rectangular ducts can easily be sized at any size. The use thereof in combination with the connection element of this embodiment provides large flexibility in the design of rectangular ducting systems, including HVAC systems. Moreover it also allows very efficient use of ducting materials because loss of ducting material due to sizing is kept at a minimum. The connection element is thus preferably designed to form a connection between two ducting components. In view of the above a ducting component in the context of the invention is a rectangular duct.

In the context of the present invention the term "rectangular" is meant to encompass square and oblong shapes. The corner of these shapes may be flattened or rounded if desired.

In general it is preferred that rectangular duct components have rounded corners, at least in their inner circumference. This increases strength of the ducting components, which is of particular importance if the ducting components are long rectangular ducts. The rounded corners also provide efficient airflow through the ducts. In line with this, and to fit into the female ends of the ducting components it is also preferred that the rectangular outer circumference of the end section or end sections of the main body of the connection element have rounded corners.

The connection element of the invention comprises separate lip elements fixed on each panel of the rectangular outer circumference of the main body. That means that each panel of the main body, i.e. the top panel, bottom panel, first side panel and second side panel has at least one distinct lip element provided attached thereto. The advantage of separate lip element is that it facilitates fitting the connection element with ducting component(s) to be connected with the connection element because separate lips provide a certain degree of slack and flexibility when installing.

Each panel may have a single lip element attached thereto, but it also possible that multiple lip elements are provided on each panel or that part of the panels (for instance the top and bottom panel) are provided with multiple lip elements and part of the panels (for instance the side panels) are provided with a single lip element. For instance in case of a connection element with an oblong shaped outer circumference, the wider panels may preferably contain a single wide lip extending over large part of the panel to provide extra strength, while the shorter panels comprise multiple lip elements.

The lip elements are configured to extend at least partially over the outer face of an end section of a ducting component when the main body is inserted therein so as to clamp said ducting component between the lip elements and the rectangular outer circumference of the main body.

In order to exert their function as clamps as effective as possible the lips should cover a substantial portion of the outer face of a ducting component inserted by the end sections of the main body. For this purpose, it is preferred that each lip element extends over the major part of a panel of the rectangular outer circumference of the main body in a direction orthogonal to the axis of the connection element. With the axis of the connection element is meant the longitudinal axis, i.e. in the direction orthogonal to the plane of the inner circumference. In other words, it is preferred that that the lips cover a major part of the panels of the main body in direction of the circumference. This also benefits to the strength of the connection. Alternatively or in addition, it is also preferred that each lip element extends over the major part of a panel of the rectangular outer circumference of the main body in a direction of the axis of the connection element. This allows maximal insertion of the ducting component(s) by the connection element and maximal clamping over full inserted area. This is in particular beneficial for the provision of a sealing connection and increases strength of the rectangular ducting system.

Similarly, in particular in case the connection element is designed with opposite end sections in order to be inserted in two opposite ducting components, it may be preferred that the end sections form the major part of the main body of connection element in direction of the axis of the main body. In this case the ducting components may both extend over a large part of the main body of the connection element up to the position where the lip elements are fixed to the main body. In view of this a lip element may suitably comprises at least two lips extending in opposite direction with respect to each other from a central section of the lip element to the respective end sections of the main body of the connection element, wherein said central section is fixed to the main body. This way ducting components can be inserted by end sections of the main body up to the position of the central section, allowing symmetrical and deep insertion. Also this contributes to the provision of a sealing connection and increases strength of the rectangular ducting system.

The lip elements can be fixed to the main body in any suitable way, including welding, glueing or hardware such as rivets, pop nails or screws.

When lip elements with lips extending in opposite direction with respect to each other from a central section of the lip element to the respective end sections of the main body of the connection element are used, it is preferred that said central section is fixed at multiple positions in the direction of the axis of the connection element and at multiple positions in the direction orthogonal to the axis of the connection element. This avoids tilting of the lips, increases the strength of the attachment of the lip element, and as a result also contributes to the strength and sealing properties of the connection. In order to facilitate installation and de-installation of a connection it is preferred that said lip elements have an end portion under an angle of the main direction of the lip elements and facing away from the main body. This way the end portion of the lip elements functions as tab portion that allows a user to lift the lips to loosen the clamping action of the lips. This facilitates installation because this way it becomes easier to slide an end section of the main body of the connection element into a ducting component and it also facilitates de-installing a connection because it allows to slide an end section of the connection element out of the end section of the ducting component connected thereto.

Rigid rectangular ducts often have one or more seams in longitudinal direction as a result of their manufacturing process. Therefore, in case the connection element serves to connect rectangular ducts with a seam it is preferred that at least one of said lip elements comprise a notch for accommodation of a seam of a ducting component wherein said main body is to be inserted. Alternatively the connection element may have multiple lips or lip elements separated with a space for accommodation of a seam of a ducting component.

In suitable embodiment, wherein the end section or sections of the main body of the connection element is/are provided with a gasket surrounding the outer circumference of the main body. This is to further seal the connection and to avoid leaking. Such a seal can be placed in a circumferential groove at the end section (s) and/or be fixed to the main body by a glue. In a suitable embodiment said gasket is a synthetic rubber, preferably an ethylene propylene diene monomer (EPDM) rubber.

It is preferred that rectangular ducting systems such as HVAC systems are composed as much as possible of a fire resistant material.

Such a material is preferably based on a metal. A HVAC system consisting fully of metal components can be classified A1 in accordance with EN 13501-01. This basically means that such a HVAC system is non-flammable.

Metal materials in this respect include, without limitation galvanised steel. It is therefore preferred that the material of the main body and lip elements is constituted of galvanized steel. Similarly the ducting components to be connected by means of the connection element of the invention are preferably composed of the same material. The connection element of the invention therefore allows to construct a rectangular ducting system which is safe in use in terms of fire risks, because the only fire sensitive components are the optional gaskets which are hidden deeply in the cleft between the end section(s) of the connection element and the end section (s) of the connected rectangular ducting component(s). Because the gaskets are deeply hidden and the present invention allows the use of minimal amounts of organic gasket material, fire risk is fully prevented.

As mentioned above the invention also relates to a rectangular ducting system, comprising at least a ducting component with a rectangular inner circumference; and connected with the connection element according to invention, wherein the end section of the main body of the connection element is inserted into the sections of said ducting component; and wherein the lip elements of the connection element clamp an end section of said ducting component between the lip elements and the rectangular outer circumference of the main body of the connection element. Such a rectangular ducting system can easily be installed by simply sliding end sections of a connection element into a receiving end section (female end section) of similar shape of a ducting component with the lips of the lip elements extending at least partially over the outer surface of this ducting component. Alternatively, the connection can be established by sliding the female section of a ducting component between the end section surface and the lip element of the connection element.

In a preferred embodiment the connection element is used to connect two opposite ducting components, such as long rectangular ducts. In this case it is preferred that the rectangular ducting system comprises at least two ducts with a rectangular inner circumference connected with each other by means of a connection element designed with opposite end sections in order to be inserted in the two opposite ducting components as described above. In such a system the opposite end sections of the main body of the connection element are inserted into end sections of respective ducts with a rectangular inner circumference. Each lip element of the connection element clamp an end section of said respective ducts between the lip elements and the rectangular outer circumference of the main body of the connection element.

The present invention is in particular applicable in the field of heating, ventilating and/or air conditioning. In this respect the invention also relates to a HVAC system, comprising the rectangular ducting system of the invention.

In this respect the connector element according to the invention may be provided with structural and/or regulating components on the inside of the main body, which components serve in regulating and controlling air flow. Such components may include, without limitation, turning vanes. Such vanes serve to minimize turbulence and resistance to air flow. Such vanes are especially suitable when the main body contains a turn that forces a change in direction of air flow.

### Detailed description of the drawings

The invention will now be further elucidated in the attached drawings. The following explanation is meant to illustrate and explain the invention and not to limit the claims.

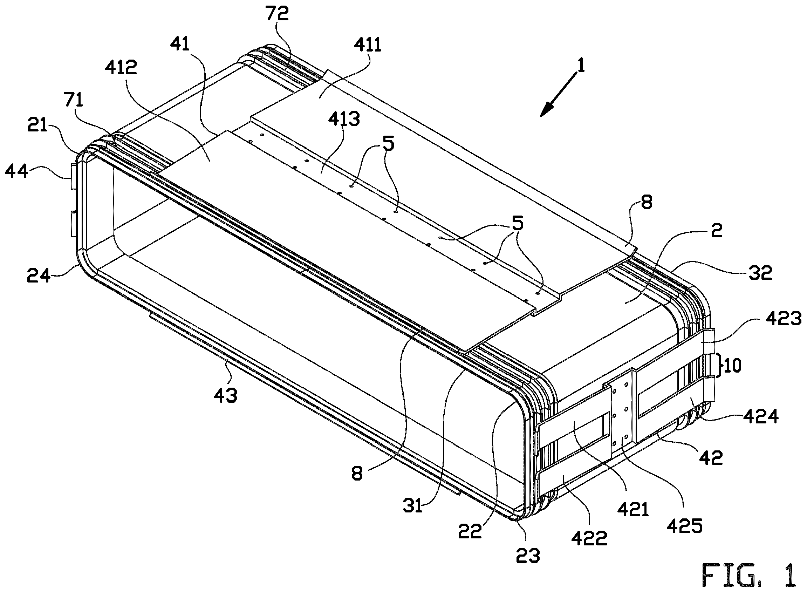

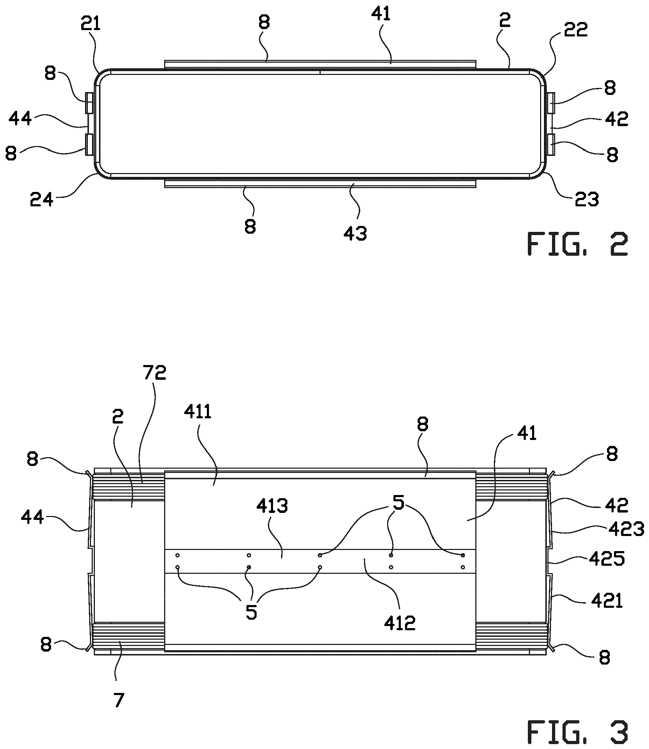

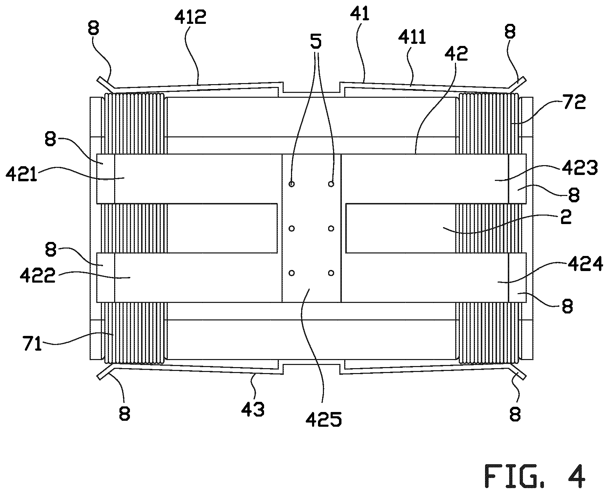

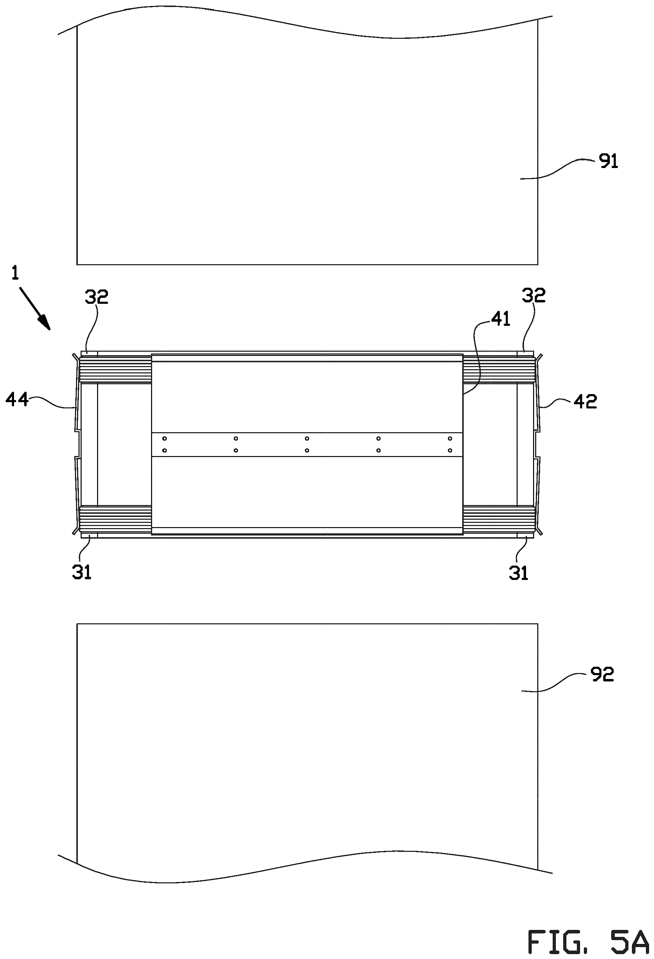

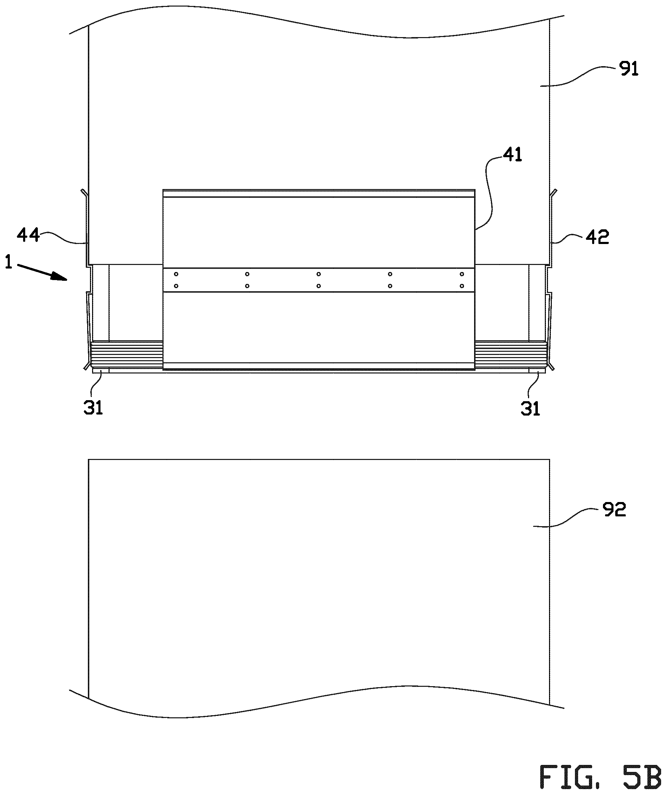

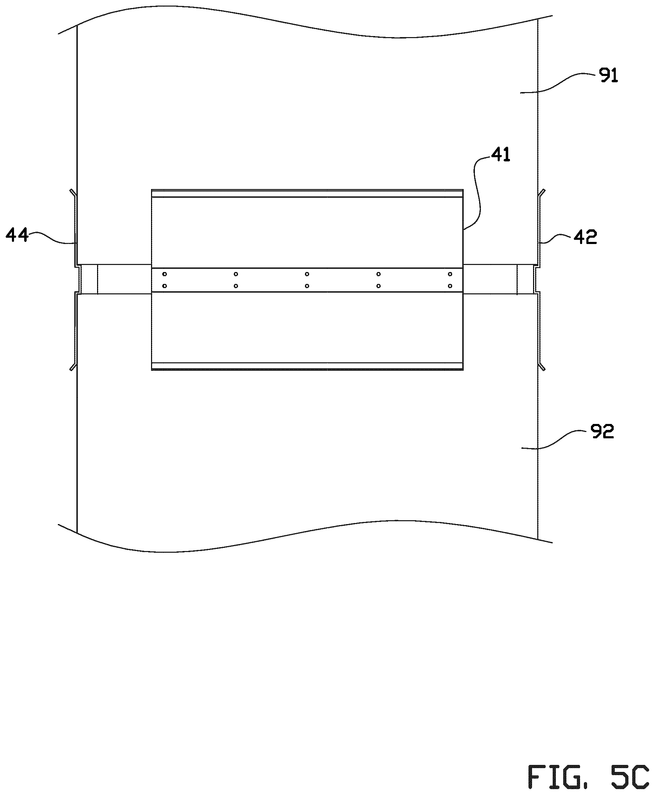

Fig 1 to 4 show a connection element 1, wherein Fig.1 shows an perspective view, Fig. 2 shows a front view, Fig. 3 shows a top view, and Fig. 4 shows a side view. Fig.5 shows a top view of connection element 1 and how it is inserted into two opposite rectangular ducting components. Corresponding reference numbers in the different drawing correspond to the same features.

Connection element 1 has a main body 2. Main body 2 comprises opposite end sections 31, 32 having a rectangular outer circumference. The rectangular outer circumference of the end sections of the main body 2 has rounded corners 21, 22, 23, 24 to provide efficient airflow through the ducts and facilitate installation. The end sections are provided with a gasket 71, 72 of (EPDM) rubber glued in a circumferential groove (not shown) surrounding the outer circumference of the main body. These gaskets further seal the connection and minimize leaking risks. The opposite end sections 31, 32 can be inserted into end sections of respective ducting components 91, 92 as shown in Fig.5 A-C. The connection element 1 comprises separate lip elements 41, 42, 43, 44 fixed on each panel of the rectangular outer circumference of the main body. Lip elements 41 and 43 are fixed on the top and bottom panel of the main body 2, respectively and lip elements 42 and 44 are each fixed a side panels of the main body 2. Lip elements 41, 42, 43, 44 are configured to extend over the outer face of end sections of ducting components 91, 92 when the main body is inserted therein so as to clamp said respective ducting components 91, 92 between the lip elements 41, 42, 43, 44 and the rectangular outer circumference of end sections 31, 32 of the main body 2. Reference is made in this respect to Fig. 5 wherein Fig. 5A shows connection element 1 with opposite ducting components 91, 92, Fig. 5B shows ducting component 91 inserted by end section 32 and Fig. 5C shows how also ducting component 92 is inserted by end section 31 of the connection element 1. As can be seen in Fig. 5C the major part of the main body 2 is inserted into the ducting components 91 and 92. The lip elements 41, 42, 43, 44 firmly clamp ducting components 91 and 92 to the connection element. Each lip element 41, 42, 43, 44 comprises at least two lips extending in opposite direction with respect to each other, to allow connection element 1 to connect two opposite ducting components 91, 92. This is shown in detail for lip element 41 on the top panel and lip element 42 on a side panel. Lip element 41 has two lips 411, 412 extending in opposite direction with respect to each other from a central section 413. Lip element 42 has 2 pairs of lips, the first pair, referred to with 421, 422, extending in opposite direction with respect to the other pair, referred to with 423, 424, from a central section 425. The configuration of lip element 41 in this respect corresponds to that of lip element 43 and the configuration of lip element 42 corresponds to that for lip element 44. The central sections are fixed to the main body 2 by welding points 5. Welding points 5 are distributed multiple positions in the direction of the axis of the connection element and at multiple positions in the direction orthogonal to the axis of the connection element. This avoids tilting of the lips, increases the strength of the attachment of the lip elements 41, 42, 43, 44, and as a result also contributes to the strength and sealing properties of the connection between ducting components 91, 92. Each parallel pair of lips of lip elements 42 and 44 is separated by a notch for accommodation of a seam of a ducting component wherein said main body is to be inserted, if necessary. See the notch between lips 421 and 422 and the notch 10 between lips 423 and 424. Each lip has an end tab 8 under an angle of the main direction of the lip elements and facing away from the main body. This way the end portion 8 of the lip elements functions as tab portion that allows a user to lift the lips to loosen the clamping action of the lips. This facilitates installation because this way it becomes easier to slide an end section 31, 32 of the main body 2 of the connection element 1 into a ducting component 91, 92 and it also facilitates de-installing a connection because it allows to easily slide an end section 31, 32 of the connection element 1 out of the ducting component 91, 92 connected thereto.

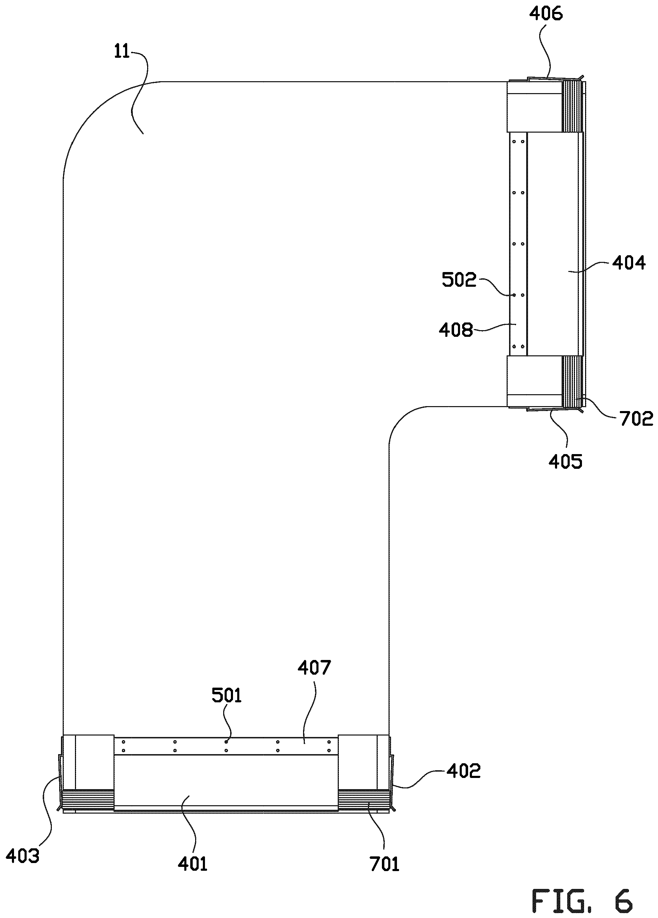

Fig.6. shows a top view of an exemplary connection element 11 according to the invention wherein its main body contains a turn that forces a change in direction of air flow. In the first end section of this element lip elements 401, 402, 403 can be seen fixed on each panel of the rectangular outer circumference of the main body. The lip sections on the bottom panel are present but are not shown in Fig.6. In the second end section, which is orthogonal with respect to the first, lip elements 404, 405, 406 can be seen. The end sections are provided with a gasket 701, 702 of (EPDM) rubber glued in a circumferential groove (not shown) surrounding the outer circumference of the main body. The lip elements 401 and 402 extend from fixing sections 407 and 408 respectively, where the lip elements are fixed by means of welds 501, 502. The other lip elements are similarly attached to the main body (not shown).

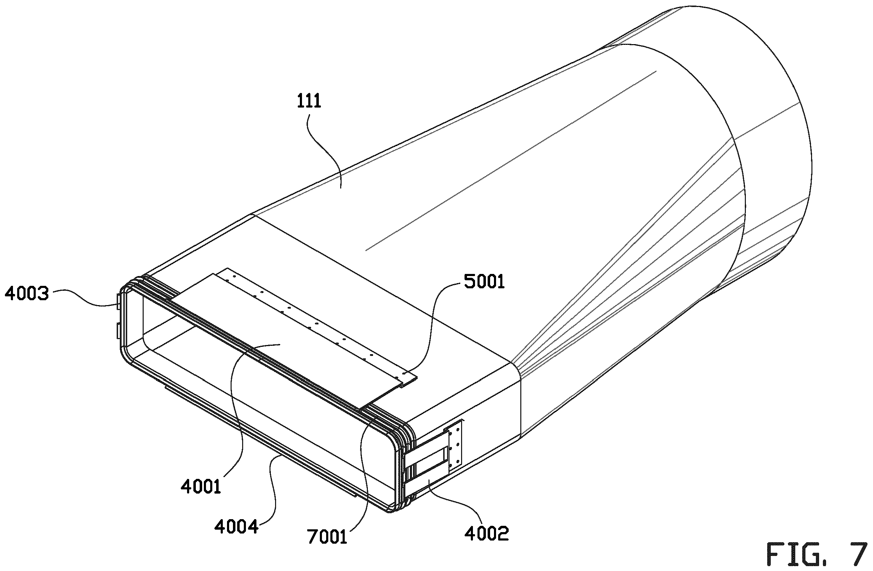

Fig.7 shows a perspective view of another exemplary connection element 111 according to the invention which contains an end section being insertable into an end section of a ducting component with a rectangular inner circumference, while the end section is designed to be connected with circular ducting components. In the rectangular end section of this element lip elements 4001, 4002, 4003, 4004 can be seen fixed on each panel of the rectangular outer circumference of the main body. The rectangular end section is provided with a gasket 7001 of (EPDM) rubber glued in a circumferential groove (not shown) surrounding the outer circumference of the main body. The lip elements extend from fixing sections, where the lip elements are fixed by means of welds 5001. The other end section has a circular cross section to allow connection with circular ducting components.

## Claims

1. Connection element (1, 11, 111) for connecting with at least one rectangular ducting component (91, 92), comprising
a main body (2) with an end section (31, 32) having a rectangular outer circumference, said end section being insertable into an end section of a respective ducting component with a rectangular inner circumference;
**characterized in that** said main body is made out of one duct-shaped piece; that the connection element further comprises at least one separate lip element (41, 42, 43, 44, 401, 402, 403, 404, 4001, 4002, 4003, 4004) fixed on the outer face of each panel of the rectangular outer circumference of the main body (2), which lip elements are configured to extend at least partially over the outer face of an end section of said ducting component when the main body is inserted therein, so as to clamp said ducting component between the lip elements and the rectangular outer circumference of the main body; and that the connection element is configured for connecting with rectangular ducting components, such that connecting only requires sliding said end section of the main body into a female ducting component to obtain a sealing connection.

2. Connection element (1, 11) according to claim 1, wherein said main body (2) comprises end sections having a rectangular outer circumference, said end sections (31, 32) configured for insertion into end sections of respective ducting components (91, 92) with a rectangular inner circumference; and wherein the lip elements are configured to extend at least partially over the outer face of end sections of said respective ducting components when the main body is inserted therein so as to clamp said respective ducting components between the lip elements and the rectangular outer circumference of the main body.

3. Connection element (1, 11, 111) according to claim 1 or 2, wherein said ducting component (91, 92) is a rectangular duct.

4. Connection element (1, 11, 111) according to any of the previous claims, wherein the rectangular outer circumference of said end section (s) (31, 32) of the main body (2) has/have rounded corners (21, 22, 23, 24).

5. Connection element (1, 11, 111) according to any of the previous claims, wherein each lip element (41, 42, 43, 44, 401, 402, 403, 404, 4001, 4002, 4003, 4004) extends over the major part of a panel of the rectangular outer circumference of the main body (2) in a direction orthogonal to the axis of the connection element and/or over the major part of a panel of the rectangular outer circumference of the main body in a direction of the axis of the connection element.

6. Connection element (1) according to any of the claims 2 to 5, wherein said lip element (41, 42) comprises at least two lips (411, 412, 421, 422, 423, 424) extending in opposite direction with respect to each other from a central section (413, 425) of the lip element to the respective end sections (31, 32) of said main body, wherein said central section is fixed to the main body.

7. Connection element (1) according to claim 6, wherein said central section (413, 425) is fixed at multiple positions in the direction of the axis of the connection element and at multiple positions in the direction orthogonal to the axis of the connection element.

8. Connection element (1, 11, 111) according to any of the previous claims, wherein said lip elements have an end portion (8) under an angle of the main direction of the lip elements (41, 42, 43, 44, 401, 402, 403, 404, 4001, 4002, 4003, 4004) and facing away from the main body (2).

9. Connection element (1, 11, 111) according to any of the previous claims, wherein at least one of said lip elements (41, 42, 43, 44, 401, 402, 403, 404, 4001, 4002, 4003, 4004) comprise a notch (10) for accommodation of a seam of a ducting component wherein said main body is to be inserted.

10. Connection element (1, 11, 111) according to any of the previous claims wherein the material of the main body (2) and lip elements (41, 42, 43, 44, 401, 402, 403, 404, 4001, 4002, 4003, 4004) is constituted of galvanized steel.

11. Connection element (1, 11, 111) according to any of the previous claims, wherein the end section or sections (31, 32) is/are provided with a gasket (71, 72) surrounding the outer circumference of the main body (2).

12. Connection element (1, 11, 111) according to claim 11, wherein said gasket (71, 72) is a synthetic rubber, preferably an ethylene propylene diene monomer (EPDM) rubber.

13. Rectangular ducting system, comprising at least a ducting component (91, 92) with a rectangular inner circumference; and connected with a connection element (1, 11, 111) according to any of the previous claims, wherein at least one end section (31, 32) of the main body (2) of the connection element is inserted into an end section of said ducting component; and wherein the lip elements (41, 42, 43, 44, 401, 402, 403, 404, 4001, 4002, 4003, 4004) of the connection element clamp said end section of said ducting component between the lip elements and the rectangular outer circumference of the main body of the connection element.

14. Rectangular ducting system according to claim 13, comprising at least two ducts (91, 92) with a rectangular inner circumference connected with each other with a connection element according (1, 11) to any of the claims 2 to 12, wherein end sections (31, 32) of the main body (2) of the connection element are inserted into end sections of respective ducts (91, 92) with a rectangular inner circumference; and wherein the lip elements (41, 42, 43, 44, 401, 402, 403, 404) of the connection element clamp said end sections of said respective ducts between the lip elements and the rectangular outer circumference of the main body of the connection element.

15. HVAC system, comprising a rectangular ducting system according to claim 13 or 14.

## Patentansprüche

1. Verbindungselement (1, 11, 111) zum Verbinden mit wenigstens einer rechteckigen Rohrleitungskomponente (91, 92), umfassend
einen Hauptkörper (2) mit einem Endabschnitt (31, 32) mit einem rechteckigen Außenumfang, wobei der Endabschnitt in einen Endabschnitt einer jeweiligen Rohrleitungskomponente mit einem rechteckigen Innenumfang einführbar ist;
**dadurch gekennzeichnet, dass** der Hauptkörper aus einem rohrförmigen Teil besteht; dass das Verbindungselement ferner wenigstens ein separates Lippenelement (41, 42, 43, 44, 401, 402, 403, 404, 4001, 4002, 4003, 4004), befestigt an der Außenseite von jeder Platte des rechteckigen Außenumfangs des Hauptkörpers (2), umfasst, wobei die Lippenelemente dazu ausgebildet sind, sich wenigstens teilweise über die Außenseite eines Endabschnitts der Rohrleitungskomponente zu erstrecken, wenn der Hauptkörper darin eingeführt ist, um die Rohrleitungskomponente zwischen den Lippenelementen und dem rechteckigen Außenumfang des Hauptkörpers zu klemmen; und dass das Verbindungselement zum Verbinden mit rechteckigen Rohrleitungskomponenten ausgebildet ist, so dass das Verbinden lediglich das Schieben des Endabschnitts des Hauptkörpers in eine Buchsen-Rohrleitungskomponente zum Erhalten einer dichten Verbindung erfordert.

2. Verbindungselement (1, 11) nach Anspruch 1, wobei der Hauptkörper (2) Endabschnitte mit einem rechteckigen Außenumfang umfasst, wobei die Endabschnitte (31, 32) zum Einführen in Endabschnitte von jeweiligen Rohrleitungskomponenten (91, 92) mit einem rechteckigen Innenumfang ausgebildet sind; und wobei die Lippenelemente dazu ausgebildet sind, sich wenigstens teilweise über die Außenseite von Endabschnitten der jeweiligen Rohrleitungskomponenten zu erstrecken, wenn der Hauptkörper darin eingeführt ist, um die jeweiligen Rohrleitungskomponenten zwischen den Lippenelementen und dem rechteckigen Außenumfang des Hauptkörpers zu klemmen.

3. Verbindungselement (1, 11, 111) nach Anspruch 1 oder 2, wobei die Rohrleitungskomponente (91, 92) ein rechteckiges Rohr ist.

4. Verbindungselement (1, 11, 111) nach einem der vorhergehenden Ansprüche, wobei der rechteckige Außenumfang des Endabschnitts / der Endabschnitte (31, 32) des Hauptabschnitts (2) abgerundete Ecken (21, 22, 23, 24) aufweist.

5. Verbindungselement (1, 11, 111) nach einem der vorhergehenden Ansprüche, wobei sich jedes Lippenelement (41, 42, 43, 44, 401, 402, 403, 404, 4001, 4002, 4003, 4004) über den Großteil einer Platte des rechteckigen Außenumfangs des Hauptkörpers (2) in einer Richtung orthogonal zur Achse des Verbindungselements und/über den Großteil einer Platte des rechteckigen Außenumfangs des Hauptkörpers in einer Richtung der Achse des Verbindungselements erstreckt.

6. Verbindungselement (1) nach einem der Ansprüche 2 bis 5, wobei das Lippenelement (41, 42) wenigstens zwei Lippen (411, 412, 421, 422, 423, 424), sich in entgegengesetzter Richtung in Bezug zueinander von einem Mittelabschnitt (413, 425) des Lippenelements zu den jeweiligen Endabschnitten (31, 32) des Hauptkörpers erstreckend, wobei der Mittelabschnitt am Hauptkörper befestigt ist, umfasst.

7. Verbindungselement (1) nach Anspruch 6, wobei der Mittelabschnitt (413, 425) an mehreren Positionen in der Richtung der Achse des Verbindungselements und an mehreren Positionen in der Richtung orthogonal zur Achse des Verbindungselements befestigt ist.

8. Verbindungselement (1, 11, 111) nach einem der vorhergehenden Ansprüche, wobei die Lippenelemente einen Endabschnitt (8), unter einem Winkel der Hauptrichtung der Lippenelemente (41, 42, 43, 44, 401, 402, 403, 404, 4001, 4002, 4003, 4004) und vom Hauptkörper (2) weg zeigend, aufweisen.

9. Verbindungselement (1, 11, 111) nach einem der vorhergehenden Ansprüche, wobei wenigstens eines der Lippenelemente (41, 42, 43, 44, 401, 402, 403, 404, 4001, 4002, 4003, 4004) eine Nut (10) zur Aufnahme einer Naht einer Rohrleitungskomponente umfasst, in die der Hauptkörper einzuführen ist.

10. Verbindungselement (1, 11, 111) nach einem der vorhergehenden Ansprüche, wobei das Material des Hauptkörpers (2) und der Lippenelemente (41, 42, 43, 44, 401, 402, 403, 404, 4001, 4002, 4003, 4004) aus verzinktem Stahl besteht.

11. Verbindungselement (1, 11, 111) nach einem der vorhergehenden Ansprüche, wobei der Endabschnitt oder die Endabschnitte (31, 32) mit einer den Außenumfang des Hauptkörpers (2) umgebenden Dichtung (71, 72) ausgestattet ist/sind.

12. Verbindungselement (1, 11, 111) nach Anspruch 11, wobei die Dichtung (71, 72) ein synthetischer Kautschuk, vorzugsweise ein Ethylen-Propylen-Dien-Monomer-(EPDM-)Kautschuk, ist.

13. Rechteckiges Rohrleitungssystem, umfassend wenigstens eine Rohrleitungskomponente (91, 92) mit einem rechteckigen Innenumfang; und verbunden mit einem Verbindungselement (1, 11, 111) nach einem der vorhergehenden Ansprüche, wobei wenigstens ein Endabschnitt (31, 32) des Hauptkörpers (2) des Verbindungselements in einen Endabschnitt der Rohrleitungskomponente eingeführt ist; und wobei die Lippenelemente (41, 42, 43, 44, 401, 402, 403, 404, 4001, 4002, 4003, 4004) des Verbindungselements den Endabschnitt der Rohrleitungskomponente zwischen den Lippenelementen und dem rechteckigen Außenumfang des Hauptkörpers des Verbindungselements klemmen.

14. Rechteckiges Rohrleitungssystem nach Anspruch 13, umfassend wenigstens zwei Rohre (91, 92) mit einem rechteckigen Innenumfang, verbunden miteinander mit einem Verbindungselement (1, 11) nach einem der Ansprüche 2 bis 12, wobei Endabschnitte (31, 32) des Hauptkörpers (2) des Verbindungselements in Endabschnitte von jeweiligen Rohren (91, 92) mit einem rechteckigen Innenumfang eingeführt sind; und wobei die Lippenelemente (41, 42, 43, 44, 401, 402, 403, 404) des Verbindungselements die Endabschnitte der jeweiligen Rohre zwischen den Lippenelementen und dem rechteckigen Außenumfang des Hauptkörpers des Verbindungselements klemmen.

15. HLK-System, umfassend ein rechteckiges Rohrleitungssystem nach Anspruch 13 oder 14.

## Revendications

1. Élément de raccordement (1, 11, 111) pour se raccorder avec au moins un composant de conduite rectangulaire (91, 92), comprenant :
un corps principal (2) avec une section d'extrémité (31, 32) ayant une circonférence externe rectangulaire, ladite section d'extrémité pouvant être insérée dans une section d'extrémité d'un composant de conduite respectif avec une circonférence interne rectangulaire ;
**caractérisé en ce que** :
ledit corps principal est composé d'une pièce en forme de conduit ; **en ce que** l'élément de raccordement comprend en outre au moins un élément de lèvre séparé (41, 42, 43, 44, 401, 402, 403, 404, 4001, 4002, 4003, 4004) fixé sur la face externe de chaque panneau de la circonférence externe rectangulaire du corps principal (2), lesquels éléments de lèvre sont configurés pour s'étendre au moins partiellement sur la face externe d'une section d'extrémité dudit composant de conduite lorsque le corps principal y est inséré, afin de serrer ledit composant de conduite entre les éléments de lèvre et la circonférence externe rectangulaire du corps principal ; et **en ce que** l'élément de raccordement est configuré pour se raccorder avec les composants de conduite rectangulaires, de sorte que le raccordement nécessite uniquement le coulissement de ladite section d'extrémité du corps principal dans un composant de conduite femelle pour obtenir un raccordement étanche.

2. Élément de raccordement (1, 11) selon la revendication 1, dans lequel ledit corps principal (2) comprend des sections d'extrémité ayant une circonférence externe rectangulaire, lesdites sections d'extrémité (31, 32) étant configurées pour l'insertion dans des sections d'extrémité des composants de conduite (91, 92) respectifs avec une circonférence interne rectangulaire ; et dans lequel les éléments de lèvre sont configurés pour s'étendre au moins partiellement sur la face externe des sections d'extrémité desdits composants de conduite respectifs lorsque le corps principal y est inséré afin de serrer lesdits composants de conduite respectifs entre les éléments de lèvre et la circonférence externe rectangulaire du corps principal.

3. Élément de raccordement (1, 11, 111) selon la revendication 1 ou 2, dans lequel ledit composant de conduite (91, 92) est un conduit rectangulaire.

4. Élément de raccordement (1, 11, 111) selon l'une quelconque des revendications précédentes, dans lequel la circonférence externe rectangulaire de ladite (desdites) section(s) d'extrémité (31, 32) du corps principal (2) a des coins arrondis (21, 22, 23, 24).

5. Élément de raccordement (1, 11, 111) selon l'une quelconque des revendications précédentes, dans lequel chaque élément de lèvre (41, 42, 43, 44, 401, 402, 403, 404, 4001, 4002, 4003, 4004) s'étend sur la majeure partie d'un panneau de la circonférence externe rectangulaire du corps principal (2) dans une direction orthogonale à l'axe de l'élément de raccordement et/ou sur la majeure partie d'un panneau de la circonférence externe rectangulaire du corps principal dans une direction de l'axe de l'élément de raccordement.

6. Élément de raccordement (1) selon l'une quelconque des revendications 2 à 5, dans lequel ledit élément de lèvre (41, 42) comprend au moins deux lèvres (411, 412, 421, 422, 423, 424) s'étendant dans la direction opposée l'une par rapport à l'autre à partir d'une section centrale (413, 425) de l'élément de lèvre jusqu'aux sections d'extrémité (31, 32) respectives dudit corps principal, dans lequel ladite section centrale est fixée sur le corps principal.

7. Élément de raccordement (1) selon la revendication 6, dans lequel ladite section centrale (413, 425) est fixée dans plusieurs positions dans la direction de l'axe de l'élément de raccordement et dans plusieurs positions dans la direction orthogonale à l'axe de l'élément de raccordement.

8. Élément de raccordement (1, 11, 111) selon l'une quelconque des revendications précédentes, dans lequel lesdits éléments de lèvre ont une partie d'extrémité (8) selon un angle de la direction principale des éléments de lèvre (41, 42, 43, 44, 401, 402, 403, 404, 4001, 4002, 4003, 4004) et orientés à l'opposé du corps principal (2) .

9. Élément de raccordement (1, 11, 111) selon l'une quelconque des revendications précédentes, dans lequel au moins l'un desdits éléments de lèvre (41, 42, 43, 44, 401, 402, 403, 404, 4001, 4002, 4003, 4004) comprend une encoche (10) pour loger une soudure d'un composant de conduite dans laquelle ledit corps principal doit être inséré.

10. Élément de raccordement (1, 11, 111) selon l'une quelconque des revendications précédentes, dans lequel le matériau du corps principal (2) et des éléments de lèvre (41, 42, 43, 44, 401, 402, 403, 404, 4001, 4002, 4003, 4004) est constitué d'acier galvanisé.

11. Élément de raccordement (1, 11, 111) selon l'une quelconque des revendications précédentes, dans lequel la section ou les sections d'extrémité (31, 32) est/sont prévue (s) avec un joint (71, 72) entourant la circonférence externe du corps principal (2).

12. Élément de raccordement (1, 11, 111) selon la revendication 11, dans lequel ledit joint (71, 72) est un caoutchouc synthétique, de préférence un caoutchouc de monomère éthylène propylène diène (EPDM).

13. Système de conduite rectangulaire comprenant au moins un composant de conduite (91, 92) avec une circonférence interne rectangulaire ; et raccordé avec un élément de raccordement (1, 11, 111) selon l'une quelconque des revendications précédentes, dans lequel au moins une section d'extrémité (31, 32) du corps principal (2) de l'élément de raccordement est insérée dans une section d'extrémité dudit composant de conduite ; et dans lequel les éléments de lèvre (41, 42, 43, 44, 401, 402, 403, 404, 4001, 4002, 4003, 4004) de l'élément de raccordement serrent ladite section d'extrémité dudit composant de conduite entre les éléments de lèvre et la circonférence externe rectangulaire du corps principal de l'élément de raccordement.

14. Système de conduite rectangulaire selon la revendication 13, comprenant au moins deux conduits (91, 92) avec une circonférence interne rectangulaire raccordées entre elles avec un élément de raccordement selon (1, 11) l'une quelconque des revendications 2 à 12, dans lequel les sections d'extrémité (31, 32) du corps principal (2) de l'élément de raccordement sont insérées dans des sections d'extrémité des conduits (91, 92) respectifs avec une circonférence interne rectangulaire ; et dans lequel les éléments de lèvre (41, 42, 43, 44, 401, 402, 403, 404) de l'élément de raccordement serrent lesdites sections d'extrémité desdits conduits respectifs entre les éléments de lèvre et la circonférence externe rectangulaire du corps principal de l'élément de raccordement.

15. Système HVAC comprenant un système de conduite rectangulaire selon la revendication 13 ou 14.
